# EUROPEAN PATENT SPECIFICATION

(11) **EP 2 698 022 B1**
(45) Date of publication and mention of the grant of the patent: **27.02.2019**
(21) Application number: 12782286.4
(22) Date of filing: 11.05.2012
(51) Int. Cl.: H04W 72/04, H04W 72/12, H04L 29/08, H04W 4/00, H04W 48/16, H04W 92/18, H04W 4/80

(54) **SYSTEM AND METHOD FOR PEER TO PEER COMMUNICATIONS IN CELLULAR COMMUNICATIONS SYSTEMS**
SYSTEM UND VERFAHREN FÜR PEER-TO-PEER-KOMMUNIKATIONEN IN ZELLKOMMUNIKATIONSSYSTEMEN
SYSTÈME ET PROCÉDÉ DE COMMUNICATIONS PAIR À PAIR DANS DES SYSTÈMES DE COMMUNICATIONS CELLULAIRES

(30) Priority: 11.05.2011 US 201113105234
(43) Date of publication of application: 19.02.2014
(73) Proprietor: Huawei Technologies Co., Ltd., Longgang District Shenzhen, Guangdong 518129 (CN)
(72) Inventor: MONTUNO, Delfin Y., Kanata, Ottawa K2K2L8 (CA); XIE, Lei, Shenzhen, Guangdong 518129 (CN)
(74) Representative: Goddar, Heinz J.
(86) International application number: PCT/CN2012/075324
(87) International publication number: WO 2012/152224

(56) References cited:
- EP-A1- 1 333 627
- EP-A1- 2 200 248
- EP-A1- 2 200 248
- CN-A- 101 543 017
- CN-A- 101 616 169
- CN-A- 101 621 538
- CN-A- 101 710 871
- CN-A- 101 924 777
- US-A1- 2011 082 939
- US-A1- 2011 098 043

## Description

### TECHNICAL FIELD

The present invention relates generally to digital communications, and more particularly to a system and method for peer-to-peer (P2P) communications in cellular communications systems.

### BACKGROUND

P2P traffic has seen rapid growth due to the popularity of P2P applications, such as file sharing, multi-media conferencing, and so forth. Generally, at a logical level, P2P communications occur between a first peer and a second peer as a point-to-point (PTP) communications as described for example in US 2011/0082939 A1 (a similar form of communications referred to as point-to-multipoint (PTM) occurs between a first peer and a plurality of second peers). Instead of having communications passing through and being controlled by a communications controller, such as an enhanced NodeB, a base station, a controller, or so on, P2P communications involving the first peer and the second peer occur directly between the first peer and the second peer. However, at a network level, P2P communications may involve a number of network devices, such as switches, routers, as well as communications controllers.

With the rapid deployment of wireless communications systems, which usually have cellular architecture and make use of communications controllers to allocate network resources for transmissions, enhancements to wireless communications systems to support P2P communications are desired. Furthermore, in PTM P2P communications involving communications controller(s), every connection between a first peer and each of the multiple second peers results in at least two connections. Thereby increasing demand for bandwidth, which, in a wireless communications system, is a limited resource. Furthermore, increasing a number of connections also causes increases in resource contention, latency, probability for error, and so forth.

### SUMMARY OF THE INVENTION

These and other problems are generally solved or circumvented, and technical advantages are generally achieved by the present invention as defined by the independent claims.

The invention is directed to a method for communications device operation according to claim 1 and to a communications device according to claim 9.

Preferred embodiments are set out in the dependent claims.

One advantage of the invention is that spectrum offloading is provided in access networks. Once device-to-device (D2D) communications is established, the D2D communications do not need to be managed through signaling, which may help to reduce spectrum load and contention.

A further advantage of the invention is that traffic offloading is provided in the core of the communications system since D2D communications does not involve communications controllers once setup. Therefore, communications controller load is reduced.

Yet a further advantage of aspects of the invention is that without requiring intervention from communications controllers, the latency involved in D2D communications may be smaller than typical cellular communications.

### BRIEF DESCRIPTION OF THE DRAWINGS

For a more complete understanding of the present invention, and the advantages thereof, reference is now made to the following descriptions taken in conjunction with the accompanying drawing, in which:
Figure 1a illustrates an example communications system;
Figure 1b illustrates a communications system, wherein the communications system supports device-to-device (D2D) communications according to example embodiments described herein;
Figure 2 illustrates an example diagram of operations in P2P communications between a first peer and a second peer, wherein the first peer receives content from the second peer according to example embodiments described herein;
Figure 3 illustrates an example communications system, wherein communications system 300 features a P2P overlay supported by D2D communications according to example embodiments described herein;
Figure 4 illustrates an example flow diagram of operations in P2P communications between a first peer and a selected peer, wherein the first peer receives content from the selected peer, and wherein P2P communications is supported as an overlay of a communications system supporting D2D communications according to example embodiments described herein;
Figure 5a illustrates an example flow diagram of peer operations in requesting and receiving a peer list according to example embodiments described herein;
Figure 5b illustrates an example flow diagram of peer operations in requesting and receiving a peer list according to example embodiments described herein;
Figure 5c illustrates an example flow diagram of peer operations in requesting and receiving a peer list according to example embodiments described herein;
Figure 6a illustrates an example flow diagram of peer operations in requesting content according to example embodiments described herein;
Figure 6b illustrates an example flow diagram of eNB operations in channel setup according to example embodiments described herein;
Figure 7 illustrates an example flow diagram of peer operations in responding to a content request according to example embodiments described herein;
Figure 8 illustrates an example flow diagram of peer operations in performing a peer update according to example embodiments described herein;
Figure 9 illustrates an example flow diagram of peer operations in sending content according to example embodiments described herein;
Figure 10 illustrates an example flow diagram of eNB operations in coordinating P2P connectivity in a communications system that supports D2D communications according to example embodiments described herein;
Figure 11 provides an example communications device according to example embodiments described herein; and
Figure 12 provides an example communications device according to example embodiments described herein.

### DETAILED DESCRIPTION OF ILLUSTRATIVE EMBODIMENTS

The making and using of the current example embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to example embodiments in a specific context, namely a wireless communications system supporting device-to-device (D2D) communications with a peer-to-peer (P2P) overlay. The invention may be applied to a wide range of wireless communications systems, such as those that are compliant to 3GPP Long Term Evolution, IEEE 802.16, WiMAX, and so forth, technical standards, as well as types of wireless communications systems.

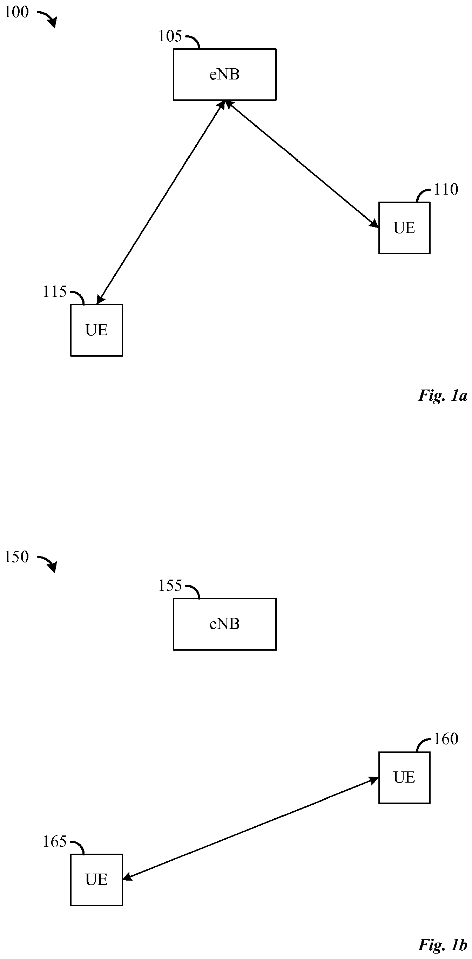

Figure 1a illustrates a communications system 100. Communications system 100 includes an enhanced NodeB (eNB) 105 controlling communications for User Equipment (UE), such as UE 110 and UE 115. While it is understood that communications systems may employ multiple eNBs capable of communicating with a number of UEs, only one eNB and two UE are illustrated for simplicity.

Communications to and from a UE (also commonly referred to as a mobile station, subscriber, user, terminal, and so forth) may be controlled by an eNB (also commonly referred to as a NodeB, controller, communications controller, base station, radio network controller, and so on). As an example, consider a transmission between UE 110 and UE 115. UE 110 may first transmit to eNB 105 and then eNB transmits to UE 115.

Figure 1b illustrates a communications system 150, wherein communications system 150 supports device-to-device (D2D) communications. Communications system 150 includes an eNB 155 and UEs 160 and 165. While it is understood that communications systems may employ multiple eNBs capable of communicating with a number of UEs, only one eNB and two UEs are illustrated for simplicity.

Communications system 150 supports D2D communications wherein a device, such as UE 160, may communicate directly with another device, such as UE 165, without having to transmit to an eNB. D2D communications enable UEs to communicate directly with one another while sharing radio resources with communications system 150.

Generally, since devices participating in D2D communications are directly transmitting to each other, the devices are located relatively closely to each other. Furthermore, unless the devices communicate using out-of-band radio resources, the radio resources used by the devices may need to be allocated to the devices by a communications controller. Hence, in a typical D2D communications scenario, the devices are controlled by a single communications controller.

However, coordination may be possible between closely located communications controllers, e.g., neighboring communications controllers, to allow devices controlled by the neighboring communications controllers to communicate using D2D communications. As an example, consider a situation with two devices, each controlled by a different neighboring communications controller. Coordination between the two neighboring communications controllers may allocate radio resources from each of the two neighboring communications controllers to allow the two devices to communicate using D2D communications.

D2D communications may reduce communications load on a communications system, reduce battery consumption, provide better resource utilization, reduce transmission delay, increase data rate, control interference with use of licensed frequency bands, provide robustness to infrastructure failures, enable new services, increase communications system capacity, and so forth.

D2D communications may further help to address concerns, such as traffic load in a communications system, efficient use of radio resources in a communications system, and so on, in light of the popularity of P2P communications and P2P applications, especially in situations wherein radio resources are scarce, such as in wireless communications systems.

In general, the use of communications controllers may be undesirable for P2P communications because a P2P connection becomes, at the very least, two connections (a first connection between a first peer and the communications controller and a second connection between the communications controller and a second peer), which may rapidly deplete radio resources in a wireless communications system.

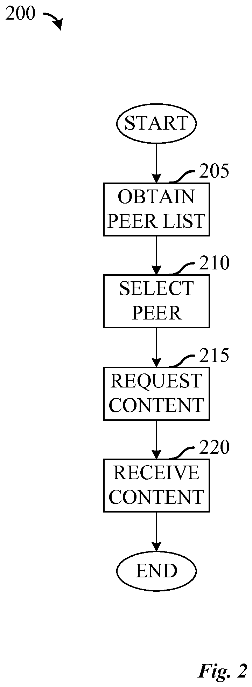

Figure 2 illustrates a diagram of operations 200 in P2P communications between a first peer and a second peer, wherein the first peer receives content from the second peer. Operations 200 may be indicative of operations occurring in the first peer as the first peer retrieves content (or other forms of information) from the second peer. Operations 200 may occur on a P2P overlay of a communications system, such as a wireless communications system or a wireline communications system or a combination wireless and wireline communications system. Operations 200 may occur while the first peer is in a normal operating mode.

Operations 200 may begin with the first peer obtaining a peer list (block 205). The first peer may obtain the peer list from a tracker, which maintains a list of peers. The tracker may organize the peer list based on content and the first peer may request a specific peer list that lists only peers for a specified content. The tracker may be a database of peers reachable by peers in the communications system. The tracker may be a centralized database or a distributed database.

The first peer may then select a peer (or peers) from the peer list (block 210). According to an example embodiment, the first peer may select one or more peers from the peer list. As an example, consider a situation wherein the first peer selects different peers for different portions of the content, which may be organized as a plurality of blocks and each of the selected peers providing a different block. Depending on the characteristics and context of the peer, some of the blocks may be supplied through a D2D connection if the peer is D2D reachable and some supplied through a non-D2D connection if the peer is non-D2D capable or at a moment of the content request, the peer is non-D2D reachable.

For discussion purposes, consider a situation wherein the first peer selects a single peer from the peer list and let the selected peer be referred to as a second peer. A situation wherein the first peer selects multiple peers from the peer list may be considered to be multiple instantiations of the first peer selecting a single peer from the peer list.

The first peer may select the second peer from the peer list based on a number of selection criteria, including D2D reach ability, available data-rate, number of supported connection, number of current connections, distance from the first peer, communications latency, historical performance data, and so forth. According to an example embodiment, the first peer may give priority to D2D reachable peers over non-D2D reachable peers, potentially by applying greater weight to D2D reachable peers. As an example, if a variety of selection criteria are approximately equal or even in favor of a non-D2D reachable peer, the first peer may preferably select a D2D reachable peer over the non-D2D reachable peer.

The first peer may then send a content request to the second peer (block 215). The content request may be in the form of a message or an indication carried in a message transmitted to the second peer. The content request may or may not include information about the first peer.

The second peer may or may not accept the content request from the first peer. If the second peer accepts the content request, a P2P connection between the first peer and the second peer may be established. If the second peer does not accept the content request, the first peer may need to select another peer from the peer list and send a content request to the other peer. According to an example embodiment, even if the second peer does accept the content request, the first peer may elect to select another peer from the peer list, for example, to request another copy of the content, to retrieve another portion of the content, to retrieve other content, or combinations thereof. The first peer may select another peer from the same peer list or the first peer may request a new and/or different peer list.

If the second peer accepts the content request from the first peer and the connection is established, then the first peer may begin to receive the requested content from the second peer (block 220).

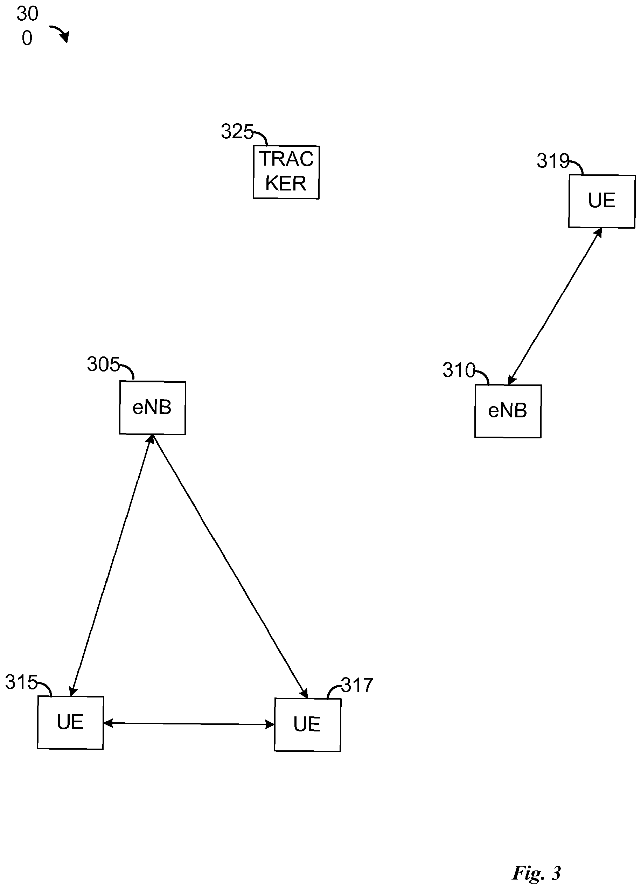

Figure 3 illustrates a communications system 300, wherein communications system 300 features a P2P overlay supported by D2D communications. Communications system 300 includes a plurality of eNBs, such as eNB 305 and eNB 310, a plurality of UEs served by the plurality of eNBs, such as UE 315, UE 317, and UE 319, and a tracker 325. While it is understood that communications systems may employ multiple eNBs capable of communicating with a number of UEs, only two eNB and three UEs are illustrated for simplicity.

As shown in Figure 3, UEs 315 and 317 are served by eNB 305 and UE 319 is served by eNB 310. For discussion purposes consider a situation wherein UE 315 wishes to establish a P2P connection with UE 317, while UE 319 performs normal cellular communications through eNB 310. Using D2D communications, UE 315 may request that eNB 305 allocate some radio resources under its control to establish a D2D link between UE 315 and UE 317 (UE 315 may have selected UE 317 out of a list of peers provided by tracker 325 or eNB 305). If eNB 305 agrees to the establishment of the D2D link between UE 315 and UE 317, eNB 305 may allocate some radio resources to the D2D link and indicate the radio resources to UE 315 and UE 317. Once UE 315 and UE 317 know the radio resources allocated to the D2D link, the P2P connection between UE 315 and UE 317 may commence.

Since UE 319 is performing normal cellular communications through eNB 310, if UE 319 has a transmission to make, it must request a grant of radio resources from eNB 310. If eNB 310 grants radio resources to UE 319, eNB 310 may inform UE 319 of the granted radio resources and at the granted radio resources, UE 319 may transmit. Similarly, if there is an incoming transmission for UE 319, eNB 310 may allocate radio resources to UE 319 and informs UE 319 of the allocated radio resources. Then, at the allocated radio resources, eNB 310 may transmit the transmission to UE 319 and UE 319 may receive the transmission.

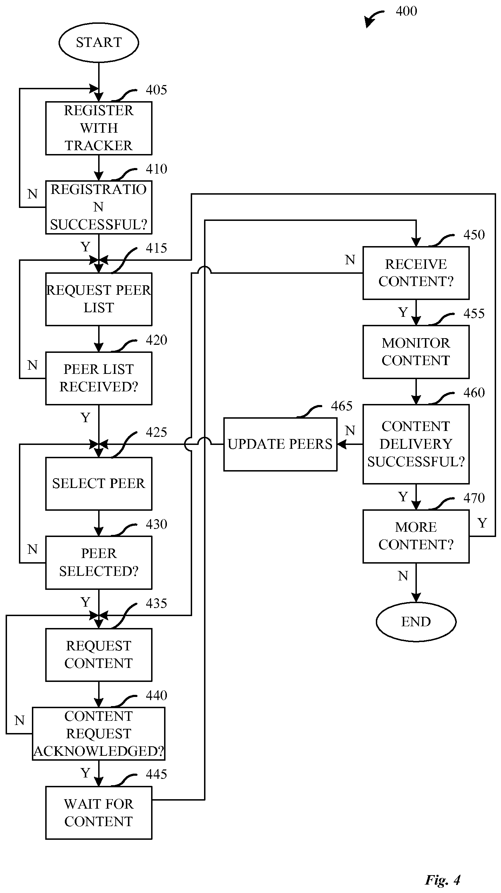

Figure 4 illustrates a flow diagram of operations 400 in P2P communications between a first peer and a selected peer, wherein the first peer receives content from the selected peer, and wherein P2P communications is supported as an overlay of a communications system supporting D2D communications. Operations 400 may be indicative of operations occurring in the first peer as the first peer receives content from the selected peer over a P2P connection supported by D2D communications. Operations 400 may occur while the first peer is in a normal operating mode.

Operations 400 may begin with the first peer registering with a tracker (block 405). As discussed previously, the tracker may be a database that keeps tracks of peers. The tracker may also maintain information about the peers, including each peer's content as well as the peer's capabilities (such as supported data rate, number of connections supported, current number of connections, content delivery history, and so forth). According to an example embodiment, some of the information related to the peers may be maintained at the first peer. For example, the first peer may maintain a delivery history of peers in a peer list. Furthermore, some of the information related to the peers may be maintained at various places in the communications system in a distributed fashion. The first peer may register with the tracker (as well as communicate with the tracker) through an eNB serving the first peer. If registration was successful (block 410), then the first peer may continue. If registration was unsuccessful, then the first peer may return to block 405 to reattempt registration with the tracker.

The handling of error conditions, such as giving up on registering with the tracker after a number of failed attempts; time out for waiting for responses from trackers, communications controllers, peers, and so on; switching between peers due to unresponsiveness, content errors, or so forth, may be necessary in implementation. However, the discussion of the handling of error conditions are omitted herein to maintain clarity of the discussion of the example embodiments.

The first peer may request a peer list (block 415). The first peer may request the peer list from the tracker. The first peer may request a peer list based on a desired content, or the first peer may request a peer list based on some other peer criteria, such as peer content delivery history, peer supported data rate, peer support number of connections, peer popularity, and so forth. The tracker may then provide the peer list to the first peer.

In order to support P2P connections with D2D communications, the peer list may need to be augmented with information that is based on a location of the first peer, e.g., an eNB serving the first peer, geographical information for the first peer, and so forth. The location information of the first peer may be used to select peers in the peer list that may communicate with the first peer using D2D communications, which may significantly improve overall performance.

According to an example embodiment, the eNB serving the first peer may augment the peer list provided by the tracker. As an example, as the eNB receives the peer list from the tracker, the eNB may augment the peer list by marking peers in the peer list that are also served by the eNB. As an example, the eNB may mark peers as being D2D capable, non-D2D capable, D2D reachable, non-D2D reachable, and so forth. The eNB may also mark peers in the peer list that are served by neighboring eNBs. The eNB may then send the augmented peer list to the first peer.

According to an example embodiment, the eNB serving the first peer may supplement the peer list provided by the tracker. As an example, as the eNB receives the peer list from the tracker, the eNB may generate a supplemental peer list that includes peers in the peer list that are also served by the eNB and/or peers in the peer list that are served by neighboring eNBs. The supplemental peer list may also include information about the D2D capabilities of the peers, such as if a peer is D2D capable, non-D2D capable, D2D reachable, non-D2D reachable, and so forth. The eNB may send the peer list and the supplemental peer list to the first peer.

According to an example embodiment, the eNB serving the first peer may supplement the peer list provided by the tracker, however, the eNB may not automatically send the supplemental peer list to the first peer. Instead, the eNB may wait until the first peer requests the supplemental peer list before sending the supplemental peer list.

If the first peer received the peer list (block 420), then the first peer may continue. If the first peer did not receive the peer list, then the first peer may return to block 415 to re-request the peer list. According to an example embodiment, the first peer may return to block 405 to register with a different tracker if after a number of requests for the peer list have failed or have resulted in an insufficient peer list.

The first peer may select a peer from the peer list (with or without augmentation or supplementation from the eNB) (block 425). The first peer may select one or more peers from the peer list based on a selection criteria, which may include D2D capability, D2D reachability, content rarity (how many times the first peer has failed in its attempts to retrieve the content, how many peers have the content, and so forth), mobility, content delivery history, peer resource availability and capability, ratio of D2D capable peers to non-D2D capable peers, and so on. As an example, the first peer may select X D2D reachable peers and Y non-D2D reachable peers, where X + Y is greater than or equal to one.

If the first peer has selected a peer from the peer list (block 430), then the first peer may continue. If the first peer has not selected a peer from the peer list, then the first peer may return to block 425 to select a peer from the peer list. According to an example embodiment, the first peer may return to block 415 to request another peer list if the peer list was insufficient or to block 405 to register with a different tracker.

The first peer may send a content request (block 435). According to an example embodiment, the first peer may send a request for a D2D channel(s) and/or a non-D2D channel(s) between itself and the selected peer(s) to the eNB. The eNB may setup the D2D channel(s) for the first peer and the selected peer(s) that are D2D reachable, modify existing PTP and/or PTM channel(s) for the first peer and the selected peer(s) that are D2D reachable, sets up a normal non-D2D channel(s) for the first peer and the selected peer(s) that are non-D2D reachable, or combinations thereof. Once the eNB has setup and/or modified the D2D channel(s) and/or the non-D2D channel(s), the eNB may send indications regarding the channels to the first peer and the selected peer(s). The indications may provide information regarding the radio resources associated with the D2D channel(s) and/or the non-D2D channel(s) as well as acknowledgement for the content request.

According to an example embodiment, the D2D channel(s) and/or the non-D2D channel(s) may be acquired through random access techniques where a pool of D2D channel(s) and/or non-D2D channel(s) may be available for use on an as needed basis.

If the content request has been acknowledged (block 440), then the first peer may continue. If the content request has not been acknowledged, then the first peer may return to block 435 to repeat its request for the content. According to an example embodiment, the first peer may return to block 425 to select another peer or to block 415 to request another peer list if the peer list was insufficient or to block 405 to register with a different tracker.

The first peer may wait for the content to arrive (block 445). The first peer may wait for the content to arrive from the selected peer(s) either through the D2D channel(s) and/or the non-D2D channel(s).

If the content has started to arrive (block 450), then the first peer may continue. If the content has not yet started to arrive, the first peer may return to block 435 to repeat its request for the content. According to an example embodiment, the first peer may return to block 425 to select another peer or to block 415 to request another peer list if the peer list was insufficient or to block 405 to register with a different tracker.

The first peer may monitor the content as it arrives (block 455). The first peer may monitor the content for purposes of determining a success of a transmission. If the content was delivered successfully (block 460), then the first peer may attempt to request additional content by first requesting a new peer list based on the additional content (block 415) if there is more content that the first peer wants but is not available at the second peer (block 470). If the second peer has additional content that the first peer desires, the first peer may continue to request the additional content from the second peer. If the content was delivered successfully (block 460), but the first peer does not have more content to request (block 470), then operations 400 may terminate.

If the content was not delivered successfully (block 460), then the first peer may update its peer information (block 465). According to an example embodiment, based on failure criteria, including defective content, timer expiration, loss of signal, failed content transfer, excessive delay, corrupted content, or so forth, the UE may determine that the content was not delivered successful and may update its peer information. The first peer may select a different peer from its peer list and/or the first peer may request from the eNB (or the tracker) a peer list of D2D reachable peers and/or non-D2D reachable peers that have the content desired by the first peer, i.e., a new peer list. The eNB (or the tracker) may send to the first peer the new peer list of D2D reachable peers and/or non-D2D reachable peers that have content desired by the first peer. The first peer may update its information about D2D reachable peers and/or non-D2D reachable peers accordingly and then send the information to the eNB (or the tracker) to allow the eNB (or the tracker) to update its peer information. With the list of D2D reachable peers and/or non-D2D reachable peers, the first peer may return to block 425 to select a peer and repeat the attempt to retrieve the content. According to an example embodiment, the first peer, upon return to block 425, may preferably select a D2D reachable peer before selecting a non-D2D reachable peer or a non-D2D capable peer.

Although the discussion focuses on the first peer making requests and receiving content from a second peer(s), the first peer may also receive request for content that it has to share and respond to the received requests. Therefore, the discussion of the first peer requesting and receiving content should not be construed as being limiting to the scope or the spirit of the embodiments.

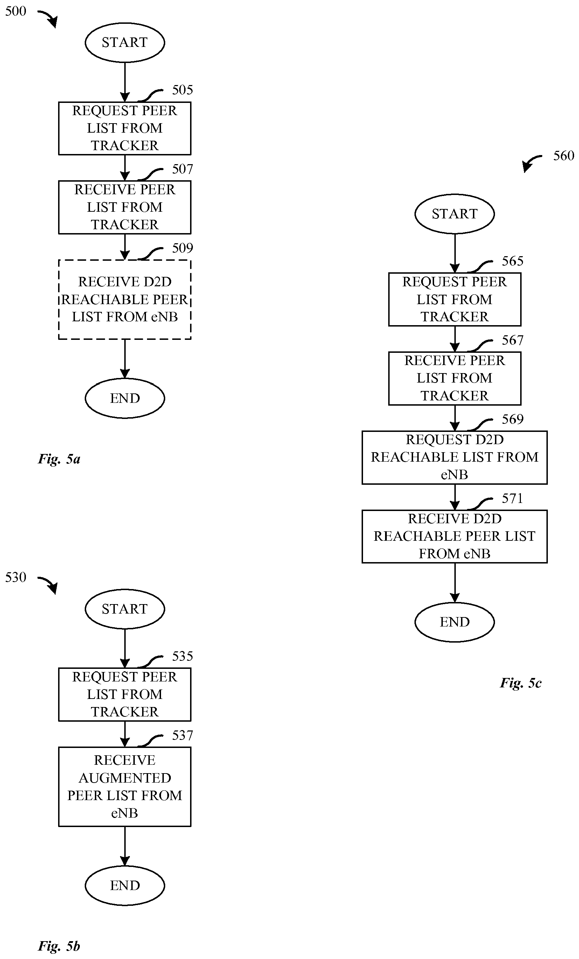

Figure 5a illustrates a flow diagram of peer operations 500 in requesting and receiving a peer list. Peer operations 500 may be indicative of operations occurring in a peer, such as a first peer, as the peer requests a peer list based on desired content. Peer operations 500 may occur while the peer is in a normal operating mode.

Peer operations 500 may begin with the peer requesting a peer list from a tracker (block 505). The peer may provide information about its desired content to the tracker to help the tracker select suitable peers for the peer. The peer may receive the peer list from the tracker (block 507).

In order to support D2D communications, a location of the peer may be critical information. Therefore, an eNB serving the peer, which may know fine detail information about the peer's location, may provide a list of D2D reachable peers to the peer, wherein the peers in the list of D2D reachable peers from the eNB is based on the desired content of the peer (block 509).

Figure 5b illustrates a flow diagram of peer operations 530 in requesting and receiving a peer list. Peer operations 530 may be indicative of operations occurring in a peer, such as a first peer, as the peer requests a peer list based on desired content. Peer operations 530 may occur while the peer is in a normal operating mode.

Peer operations 530 may begin with the peer requesting a peer list from a tracker (block 535). The peer may provide information about its desired content to the tracker to help the tracker select suitable peers for the peer. As the tracker provides the peer list to the peer, an eNB serving the peer may intercept the peer list and generate an augmented peer list for the peer. According to an example embodiment, the eNB may augment the peer list from the tracker by marking peers in the peer list that are D2D reachable. Furthermore, the eNB may provide information regarding the peers, including peer content delivery history, peer supported data rate, peer support number of connections, peer popularity, and so forth. The peer may then receive the augmented peer list from the eNB (block 537).

Figure 5c illustrates a flow diagram of peer operations 560 in requesting and receiving a peer list. Peer operations 560 may be indicative of operations occurring in a peer, such as a first peer, as the peer requests a peer list based on desired content. Peer operations 560 may occur while the peer is in a normal operating mode.

Peer operations 560 may begin with the peer requesting a peer list from a tracker (block 565). The peer may provide information about its desired content to the tracker to help the tracker select suitable peers for the peer. The peer may receive the peer list from the tracker (block 567).

However, the peer list from the tracker may not include information that may be optimized based on location information of the peer, which may help improve communications performance through the use of D2D communications. The peer may request a peer list of D2D reachable peers (and potentially non-D2D reachable peers) from an eNB serving the peer (block 569). The eNB may be a good entity to maintain D2D information regarding peers that it is serving. Having the tracker maintain the information may place too great a burden on the tracker as well as increasing communications traffic to and from the tracker to provide updates related to D2D peer information. The peer may then receive a D2D reachable peer list from the eNB based on its desired content and the location of the peer (block 571).

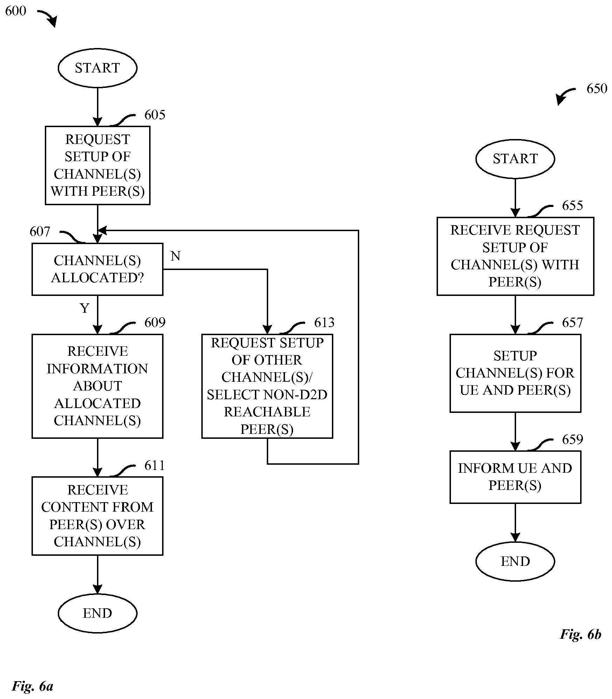

Figure 6a illustrates a flow diagram of peer operations 600 in requesting content. Peer operations 600 may be indicative of operations occurring in a peer, such as a first peer, as the peer requests content from peer(s) selected from a peer list. Peer operations 600 may occur while the peer is in a normal operating mode.

Peer operations 600 may begin with the peer requesting the setup of channel(s) with the peer(s) (block 605). According to an example embodiment, the peer may request the setup of the channel(s) from an eNB serving the peer. The eNB may respond with an indication of the channel(s) that it has setup if the eNB successfully setup the channel(s). According to an example embodiment, rather than setup channel(s) for the peer, the eNB may modify existing channel(s).

If the eNB has setup channel(s) for the peer (block 607), then the peer may receive information about the channel(s) (block 609) and begin to receive the content from the peer(s) (block 611). If the eNB has not setup channel(s) for the peer (block 607), then the peer may need to request a setup of other channel(s) and/or select other peers, such as non-D2D reachable peer(s) (block 613) and return to block 607 to determine if the eNB has setup the other channel(s) or channel(s) corresponding to the other peers.

Figure 6b illustrates a flow diagram of eNB operations 650 in channel setup. eNB operations 650 may be indicative of operations occurring in an eNB serving a peer as the peer requests content from its peers. eNB operations 650 may occur while the eNB is in a normal operating mode. eNB operations 650 may begin with the eNB receiving a request for a setup of channel(s) to peer(s) of the peer (block 655). The peer(s) may or may not be served by the eNB. The eNB may then setup the channel(s) to the peer(s). If some of the peer(s) are served by the eNB and if they are D2D capable and are D2D reachable, then the eNB may setup D2D channel(s) to those peer(s) that are D2D capable and are D2D reachable. For peer(s) that are not D2D capable (and are not D2D reachable) and those that are not served by the eNB, the eNB may setup non-D2D channel(s). According to an example embodiment, rather than setup channel(s) for the peer, the eNB may modify existing channel(s). The eNB may provide information regarding the channel(s) to the peer and the peer(s) if the eNB was successful in setting up the channel(s) (block 659).

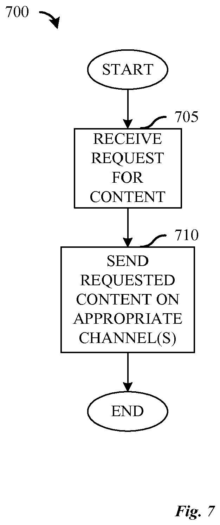

Figure 7 illustrates a flow diagram of peer operations 700 in responding to a content request. Peer operations 700 may be indicative of operations occurring in a peer, such as a D2D reachable peer, as the peer responds to a content request from a first peer. Peer operations 700 may occur while the peer is in a normal operating mode.

Peer operations 700 may begin with the peer receiving a content request from the first peer (block 705). According to an example embodiment, the content request may not come directly from the first peer, but from an eNB serving the first peer (and likely serving the peer as well). The content request may have been sent to the eNB to establish a D2D channel between the first peer and the peer and upon establishment of D2D channel, the content request along with the information regarding the D2D channel may be forwarded to the peer.

The peer may then send the requested content to the first peer (block 710). According to an example embodiment, the requested content may be sent over the D2D channel or a cellular channel if a non-D2D channel was established for the peer. If the first peer is the only peer requesting the content, then the peer may send the requested content on a PTP D2D channel. If there are other first peers requesting the content, then the peer may send the requested content on a PTM D2D channel. If there already other first peers receiving the content, then the peer may send the requested content on an existing PTM D2D channel.

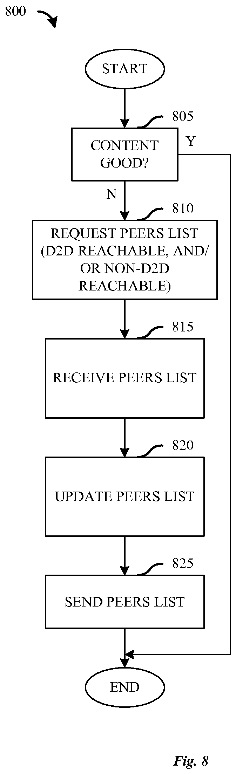

Figure 8 illustrates a flow diagram of peer operations 800 in performing a peer update. Peer operations 800 may be indicative of operations occurring in a peer, such as a first peer, as the peer performs a peer update in response to received content. Peer operations 800 may occur while the peer is in a normal operating mode.

Peer operations 800 may begin with the peer determining if the received content from a content peer was good (block 805). According to an example embodiment, the peer may determine if the received content was good through the use of quality criteria, such as expiration of a timer, detection of signal loss, failed content transfer, excessive delay, faulty content, or combinations thereof. If the received content was not good (i.e., one or more of the quality criteria was met), then the peer may select another peer from its peer list and/or request a new peer list of D2D reachable peers and/or non-D2D reachable peers from an eNB serving the peer or a tracker to which the peer is registered (block 810).

The peer may then receive the peer list from the eNB (or the tracker) (block 815) the peer may update the peer list with information that the peer just garnered for the content peer (block 820) and send the updated peer list back to the eNB (or the tracker (block 825).

If the content was determined to have been good (block 805), then the peer may not need to perform the peer update.

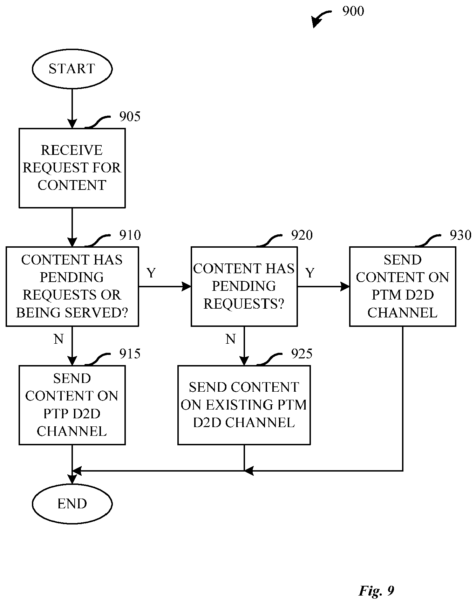

Figure 9 illustrates a flow diagram of peer operations 900 in sending content. Peer operations 900 may be indicative of operations occurring in a peer as the peer receives a request for content from a first peer(s) and sends the content to the first peer(s). Peer operations 900 may occur while the peer is in a normal operating mode.

Peer operations 900 may begin with the peer receiving a request for content from one or more first peers (block 905). According to an example embodiment, the peer may group the requests for content based on the content requested and/or first peer(s). For example, if multiple first peers are requesting the content, the peer may respond to the requests for content differently than if only a single first peer is requesting the content.

The peer may perform a check to determine if the request for content(s) is for content that is already being served (or has been served) and/or if there are multiple requests for the same content (block 910). If the content is not already being served (or has not been served) and/or if there are multiple requests for the same content, i.e., only a single peer is requesting the content, then the peer may send the content to the first peer over a PTP D2D channel (block 915). According to an example embodiment, the peer may use a PTP D2D channel established by a communications controller serving the peer and the first peer or a PTP D2D channel already established for other content.

If the content is already being served (or has been served) and/or if there are multiple requests for the same content, then the peer may perform a check to determine if there are multiple requests for the same content (block 920). If there are not multiple requests for the same content, i.e., the content is already being served or has been served, then the peer may send the content on an existing PTM D2D channel (block 925). The peer reuses an existing channel rather than use a newly establish channel.

If there are multiple requests for the same content, then the peer may send the content on a PTM D2D channel (block 930).

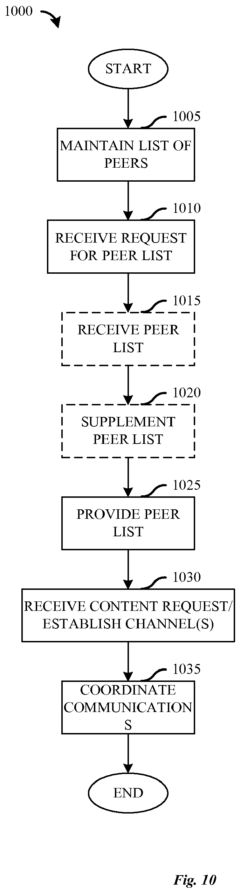

Figure 10 illustrates a flow diagram of eNB operations 1000 in coordinating P2P connectivity in a communications system that supports D2D communications. eNB operations 900 may be indicative of operations occurring in an eNB that is serving a number of peers in its coverage area, wherein some of the peers are D2D capable and may wish to participate in P2P communications. eNB operations 1000 may occur while the eNB is in a normal operating mode. eNB operations 1000 may begin with the eNB maintaining a list of served peers (block 1005). In order to support D2D communications, the eNB may need to maintain a list of peers (UEs) that it is serving. The list of peers may include some or all UEs served by the eNB and may include information about the peers, such as their D2D capabilities, content, performance information, restrictions and qualifications, peer profile, and so forth.

The eNB may maintain a list of peers that it is serving by adding new peers and deleting departing peers. For each peer, the eNB may keep track of the peer's location. Furthermore, the eNB may identify if the peer is D2D capable or non-D2D capable. Additionally, the eNB may store preferences for each peer with respect to D2D-based communications, such as a range of D2D communications, which may be overridden by the eNB based on power constraints. The eNB may also keep a peer list for each P2P application to facilitate an update of D2D reachable peers.

According to an example embodiment, the eNB may mark peers in the list of peers as members of a peer list that are D2D capable and reachable based on the first peer's profile, provided that the peers are visible and modifiable. The peer list of D2D capable and reachable peers may be updated periodically or upon occurrence of an update event, such as an addition or deletion of a peer, a failed content request, or so on.

According to an example embodiment, the eNB may provide the list of peers in the form of a peer list for the first peer based on the first peer's profile if the peer list is readable but not modifiable. The peer list may be updated periodically or upon an occurrence of an update event.

According to an example embodiment, the eNB may provide a list of D2D reachable peers based on the first peer's profile if the peer list is not readable. The peer list may be updated periodically or upon an occurrence of an update event.

According to an example embodiment, the eNB may provide a list of D2D reachable peers to the first peer upon request from the first peer, wherein the list is based on the first peer's profile. The peer list may be updated periodically or upon an occurrence of an update event.

In addition to managing the list of peers served by the eNB, the eNB may also allocate radio resources and schedule D2D channels. The eNB may also limit a maximum power of each D2D channel, control a number of D2D channels that a single peer may participate in, provide PTP and/or PTM D2D channels as needed, can serve as a proxy peer for any peer in the form of a D2D source or D2D receiver.

The eNB may further control a number of communicating D2D peers to mitigate power; determine a reach ability (in out of range situations, for example) of peers by use of techniques such as proximity, transmit power, and so forth; inform communicating peers of impending out of range D2D communications situations; coordinate between D2D communications and normal cellular communications in terms of scheduling and/or switching for purpose of reliability and/or error recovery.

While the eNB is maintaining the list of peers, a peer being served by the eNB may request a peer list based on a desired content. The peer may send a peer list request to the eNB (or to a tracker via the eNB), wherein the peer list request may include the desired content(s) (block 1010). If the peer list request is directed to the tracker, then the eNB may forward the peer list request to the tracker.

According to an example embodiment, if the peer list request is directed to the eNB (or even if the peer list requested is directed to the tracker), the eNB may proceed to generate a peer list of its own based on the desired content specified by the peer. The peer list generated by the eNB may contain information regarding peers specifically controlled by the eNB and may be more detailed than information regarding peers provided by the tracker. As an example, the peer list generated by the eNB may contain information regarding which peers are D2D capable and/or D2D reachable by the peer that is requesting the peer list.

If the peer list request is directed to the tracker, then the eNB may receive the peer list from the tracker (block 1015). The eNB may elect to supplement and/or augment the peer list received from the tracker with information about peers that are served by the eNB (block 1020). According to an example embodiment, the eNB may edit the peer list received from the tracker. For example, the eNB may mark peers in the peer list that are D2D reachable, as well as provide performance information related to the peer. According to an example embodiment, the eNB may elect to not modify the peer list provided by the tracker (or is not able to modify the peer list provided by the tracker), instead relying on its own peer list.

The eNB may provide the peer list to the peer making the peer list request (block 1025). According to an example embodiment, the eNB may send the peer list provided by the tracker to the peer. According to an alternative example embodiment, the eNB may send the supplemented and/or augmented peer list to the peer. According to an alternative example embodiment, the eNB may send the peer list provided by the tracker and its own peer list to the peer. According to an alternative example embodiment, the eNB may send the peer list provided by the tracker to the peer and only send its own peer list to the peer upon receiving a request from the peer.

The eNB may receive a content request from the peer (block 930). According to an example embodiment, the content request may specify a selected peer(s) where the peer wishes to retrieve content. The content request may also include the peer's profile. Based on the content request, the selected peer(s), and so forth, the eNB may establish channel(s), e.g., D2D channel(s), non-D2D channel(s), or combinations thereof (block 1030). The eNB may make use of existing channel(s) or establish new channel(s).

The eNB may coordinate communications between the peer and the selected peer(s) by sending information about the channel(s) to the peer and the selected peer(s) (block 1035). The eNB may also send information about the requested content to the selected peer(s) to initiate the transfer of the requested content.

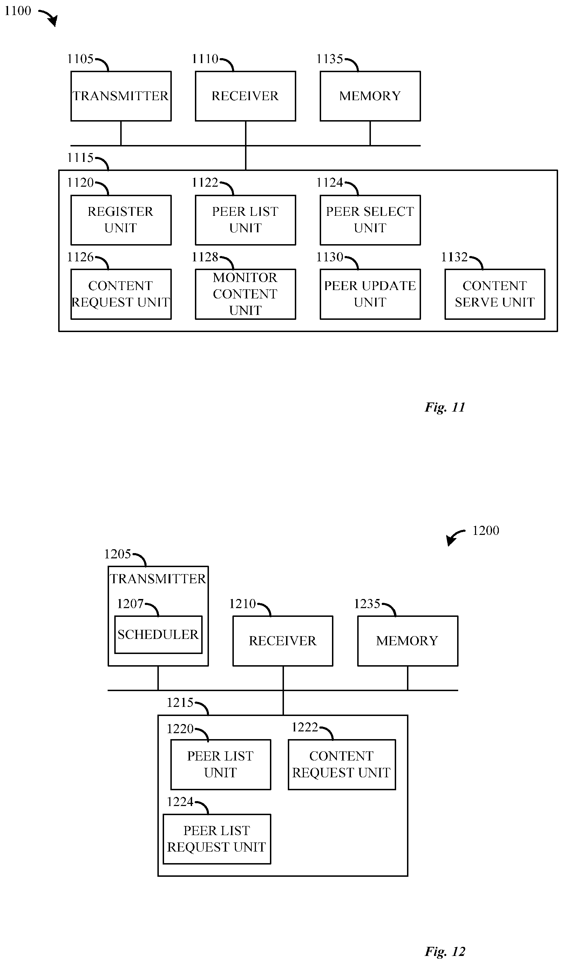

Figure 11 provides an alternate illustration of a communications device 1100. Communications device 1100 may be an implementation of a communications device, such as a UE or a peer. Communications device 1100 may be used to implement various ones of the embodiments discussed herein. As shown in Figure 11, a transmitter 1105 is configured to transmit information and a receiver 1110 that is configured to receive information and indications.

A register unit 1120 is configured to register communications device 1100 to a tracker. A peer list unit 1122 is configured to process a peer list, such as request a peer list, maintain the peer list, update the peer list based on results of content transfers, and so forth. A peer select unit 1124 is configured to select a peer(s) from the peer list based on peer selection criteria, including available data-rate, number of supported connection, number of current connections, distance from the first peer, latency, and so forth.

A content request unit 1126 is configured to generate a content request based on a desired content, a selected peer(s), and so on. A monitor content unit 1128 is configured to monitor content received from a selected peer(s). For example, monitor content unit 1128 may monitor if the content was received successfully. Monitor content unit 1128 may deem that the content was not received successfully based on failure criteria, including timer expiration, lost of signal, failed content transfer, excessive delay, corrupted content, or so forth. A peer update unit 1130 is configured to update the list of peers maintained by a communications device serving communications device 1100. As an example, communications device 1100 may update is information about D2D reachable peers and/or non-D2D reachable peers accordingly and then send the information to the communications device serving communications device 1100 (or the tracker) to allow the communications device serving communications device 1100 (or the tracker) to update its peer information.

A content serve unit 1132 is configured to schedule, retrieve, and so forth, requested content to peer(s) of communications device 1100. Content serve unit 1132 processes requests for contents to determine if there are multiple requests for the same content, if requests for content already sent or currently being sent, if there is a single request for content, or so on. Based on the requests for content, communications device 1100 may make use of an existing PTP D2D channel or a PTM D2D channel to transmit the content to the peers or use a newly established PTP D2D channel or a PTM D2D channel. Furthermore, if content serve unit 1132 may elect to use a communications controller controlled channel, i.e., a normal channel, to send the content to the peer(s). A memory 1135 is configured to store peer lists, content, peer information, and so forth.

The elements of communications device 1100 may be implemented as specific hardware logic blocks. In an alternative, the elements of communications device 1100 may be implemented as software executing in a processor, controller, application specific integrated circuit, or so on. In yet another alternative, the elements of communications device 1100 may be implemented as a combination of software and/or hardware.

As an example, receiver 1110 and transmitter 1105 may be implemented as a specific hardware block, while register unit 1120, peer list unit 1122, peer select unit 1124, content request unit 1126, monitor content unit 1128, peer update unit 1130, and content serve unit 1132 may be software modules executing in a microprocessor (such as processor 1115) or a custom circuit or a custom compiled logic array of a field programmable logic array.

Figure 12 provides an alternate illustration of a communications device 1200. Communications device 1200 may be an implementation of a communications controller, such as an eNB, a RN, or so on. Communications device 1200 may be used to implement various ones of the embodiments discussed herein. As shown in Figure 12, a transmitter 1205 is configured to transmit information and indications. Transmitter 1205 includes a scheduler 1207 that is configured to schedule a transmission based to support P2P communications for peers without D2D capability, and so forth. Scheduler 1207 establishes channels for the communicating peers. Communications device 1200 also includes a receiver 1210 that is configured to receive information.

A peer list unit 1220 is configured to generate and maintain a list of peers for communications devices served by communications device 1200. Peer list unit 1220 is also configured to perform updates on the list of peers based on information provided by the communications devices, trackers, and so forth. A content request unit 1222 is configured to process content requests from communications devices, such as initiate an establishment of channels between communications device, for example non-D2D channel(s), D2D channel(s), or combinations thereof, based on a content request from a communications device. Content request unit 1222 is also configured to forward a content request to a selected communications device selected by the communications device.

A peer list request unit 1224 is configured to process peer list requests from a communications device, such as initiating a generation of a peer list based on a content desired by the communications device. The peer list request unit 1224 is also configured to augment and/or supplement a peer list provided by a tracker using peer list information from peer list unit 1220. A memory 1235 is configured to store peer list, peer information, and so forth.

The elements of communications device 1200 may be implemented as specific hardware logic blocks. In an alternative, the elements of communications device 1200 may be implemented as software executing in a processor, controller, application specific integrated circuit, or so on. In yet another alternative, the elements of communications device 1200 may be implemented as a combination of software and/or hardware.

As an example, receiver 1210 and transmitter 1205 may be implemented as a specific hardware block, while peer list unit 1220, content request unit 1222, and peer list request unit 1224 may be software modules executing in a microprocessor (such as processor 1215) or a custom circuit or a custom compiled logic array of a field programmable logic array.

The above described embodiments of communications device 1100 and communications device 1200 may also be illustrated in terms of methods comprising functional steps and/or non-functional acts. The previous description and related flow diagrams illustrate steps and/or acts that may be performed in practicing example embodiments of the present invention. Usually, functional steps describe the invention in terms of results that are accomplished, whereas non-functional acts describe more specific actions for achieving a particular result. Although the functional steps and/or non-functional acts may be described or claimed in a particular order, the present invention is not necessarily limited to any particular ordering or combination of steps and/or acts. Further, the use (or non use) of steps and/or acts in the recitation of the claims - and in the description of the flow diagrams(s) for Figures 2, 4, 5a, 5b, 5c, 6a, 6b, 7, 8, 9, and 10 - is used to indicate the desired specific use (or non-use) of such terms.

Although the present invention and its advantages have been described in detail, it should be understood that various changes, substitutions and alterations can be made herein without departing from the scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for communications device operations, the method comprising:
receiving a peer list at a communications device (315,317,319) wherein the peer list comprises a list of reachable communications devices and device-to-device, D2D, capability information for the reachable communications devices;
selecting a peer from the peer list;
sending a content request comprising an indication of a content to the communications controller (305) serving the communications device (315,317,319);
receiving the content from the peer over a channel established by the communications controller (305), monitoring the content, wherein monitoring the content comprises determining if the content was received successfully; and
updating peer information if the content was received unsuccessfully,
wherein updating peer information comprises:
updating information regarding the peer;
sending the updated information regarding the peer to the communications controller (305);
selecting a replacement peer from the peer list or a new peer list; and
repeating the sending the content request and the receiving the content with the replacement peer.

2. The method of claim 1, wherein D2D capability information comprises D2D capable information, non-D2D capable information, D2D reachable information, non-D2D reachable information, or combinations thereof.

3. The method of claim 1, further comprising sending a peer list request to a tracker or the communications controller, the peer list request comprising an indication of the content.

4. The method of claim 1, wherein the receiving a peer list comprises receiving the peer list from a tracker and the peer list is augmented with the D2D capability information of the reachable communications devices provided by the communications controller.

5. The method of claim 1, wherein the peer list comprises a first peer list and a second peer list, wherein the first peer list is received from a tracker, and wherein the second peer list comprises the D2D capability information of the reachable communications devices provided by the communications controller.

6. The method of claim 1, wherein selecting a peer comprises selecting at least one peer from the peer list based on selection criteria, wherein the selection criteria comprises D2D reach ability, available data-rate, a number of supported connection, a number of current connections, distance from the communications device, communications latency, historical performance data, or combinations thereof.

7. The method of claim 1, wherein receiving the content comprises receiving the content directly from a D2D reachable communications device when the D2D reachable communications device is selected.

8. The method of claim 1, wherein determining if the content was received unsuccessfully comprises determining if the content was defective, a first timer expired before receiving any content, a second timer expired while receiving the content, a loss of signal occurred while receiving the content, a failure occurred while receiving the content, or combinations thereof.

9. A communications device (1100) comprising:
a receiver (1110) configured to receive a peer list comprising a list of reachable communications devices and D2D capability of the reachable communications devices;
a peer select unit (1124) coupled to the receiver, the peer select unit configured to select a peer from the peer list;
a content request unit (1126) coupled to the peer select unit and to the receiver, the content request unit configured to generate a content request comprising an indication of a content; and
a transmitter (1105) coupled to the peer select unit and to the content request unit, the transmitter configured to send the content request to the communications controller (305) serving the communications device (1100),
wherein the receiver is further configured to receive the content from the peer over a channel established by the communications controller (305), wherein the communications device (1100) is configured to:
monitor the content wherein monitoring the content comprises determining if the content was received successfully; and
update peer information if the content was received unsuccessfully,
wherein updating peer information comprises:
updating information regarding the peer;
sending the updated information regarding the peer to the communications controller (305);
selecting a replacement peer from the peer list or a new peer list; and
repeating the sending the content request and the receiving the content with the replacement peer.

## Patentansprüche

1. Verfahren für Operationen von Kommunikationseinrichtungen, wobei das Verfahren umfasst:
Empfangen einer Peer-Liste an einer Kommunikationseinrichtung (315, 317, 319), wobei die Peer-Liste eine Liste erreichbarer Kommunikationseinrichtungen und Device-zu-Device D2D-Potenzialinformation für die erreichbaren Kommunikationseinrichtungen umfasst;
Auswählen eines Peers aus einer Peer-Liste;
Senden einer Inhaltsanforderung, umfassend eine Angabe eines Inhalts, zur Kommunikationssteuerung (305), die die Kommunikationseinrichtung (315, 317, 319) bedient;
Empfangen des Inhalts vom Peer über einen durch die Kommunikationssteuerung (305) festgelegten Kanal,
Überwachen des Inhalts, wobei das Überwachen des Inhalts umfasst:
Ermitteln, ob der Inhalt erfolgreich empfangen wurde; und
Aktualisieren der Peer-Information, falls der Inhalt nicht erfolgreich empfangen wurde, wobei das Aktualisieren der Peer-Information umfasst:
Aktualisieren von Information bezüglich des Peers;
Senden der aktualisierten Information bezüglich des Peers zur Kommunikationssteuerung (305);
Auswählen eines Ersatz-Peers aus der Peer-Liste oder einer neuen Peer-Liste; und
Wiederholen des Sendens der Inhaltsanforderung und des Empfangs des Inhalts mit dem Ersatz-Peer.

2. Verfahren nach Anspruch 1, wobei die D2D-Potenzialinformation D2D-fähige Information, nicht D2D-fähige Information, D2D-erreichbare Information, nicht D2D-erreichbare Information oder Kombinationen daraus umfasst.

3. Verfahren nach Anspruch 1, ferner umfassend das Senden einer Peer-Listenanforderung zu einem Tracker oder zur Kommunikationssteuerung, wobei die Peer-Listenanforderung eine Angabe des Inhalts umfasst.

4. Verfahren nach Anspruch 1, wobei das Empfangen einer Peer-Liste das Empfangen der Peer-Liste von einem Tracker umfasst und die Peer-Liste mit der von der Kommunikationssteuerung bereitgestellten D2D-Potenzialinformation der erreichbaren Kommunikationseinrichtungen erweitert wird.

5. Verfahren nach Anspruch 1, wobei die Peer-Liste eine erste Peer-Liste und eine zweite Peer-Liste umfasst, wobei die erste Peer-Liste von einem Tracker empfangen wird und wobei die zweite Peer-Liste die von der Kommunikationssteuerung bereitgestellte D2D-Potenzialinformation der erreichbaren Kommunikationseinrichtungen umfasst.

6. Verfahren nach Anspruch 1, wobei das Auswählen eines Peers das Auswählen von mindestens einem Peer aus der Peer-Liste basierend auf Auswahlkriterien umfasst, wobei die Auswahlkriterien die D2D-Erreichbarkeit, die verfügbare Datenrate, eine Anzahl unterstützter Verbindungen, eine Anzahl aktueller Verbindungen, die Distanz von der Kommunikationseinrichtung, die Kommunikationslatenz, historische Performanzdaten oder Kombinationen daraus aufweisen.

7. Verfahren nach Anspruch 1, wobei das Empfangen des Inhalts das Empfangen des Inhalts direkt von einer erreichbaren D2D-Kommunikationseinrichtung umfasst, wenn die erreichbare D2D-Kommunikationseinrichtung ausgewählt ist.

8. Verfahren nach Anspruch 1, wobei das Ermitteln, ob der Inhalt nicht erfolgreich empfangen wurde, das Ermitteln umfasst, ob der Inhalt defekt war, ein erster Timer vor dem Empfang von Inhalt abgelaufen war, ein zweiter Timer während des Empfangs des Inhalts abgelaufen ist, während des Empfangs des Inhalts ein Signalverlust aufgetreten ist, während des Empfangs des Inhalts ein Fehler aufgetreten ist oder Kombinationen daraus.

9. Kommunikationseinrichtung (1100), umfassend:
einen Empfänger (1110), ausgelegt zum Empfangen einer Peer-Liste, umfassend eine Liste erreichbarer Kommunikationseinrichtungen und ein D2D-Potenzial der erreichbaren Kommunikationseinrichtungen;
eine Peer-Auswahleinheit (1124), gekoppelt mit dem Empfänger, wobei die Peer-Auswahleinheit ausgelegt ist zum Auswählen eines Peers aus der Peer-Liste;
eine Inhaltsanforderungseinheit (1126), gekoppelt mit der Peer-Auswahleinheit und mit dem Empfänger, wobei die Inhaltsanforderungseinheit ausgelegt ist zum Erzeugen einer Inhaltsanforderung, umfassend eine Angabe eines Inhalts; und
einen Sender (1105), gekoppelt mit der Peer Auswahleinheit und der Inhaltsanforderungseinheit, wobei der Sender ausgelegt ist zum Senden der Inhaltsanforderung zur Kommunikationssteuerung (305), die die Kommunikationseinrichtung (1100) bedient,
wobei der Empfänger ferner ausgelegt ist zum Empfangen des Inhalts vom Peer über einen durch die Kommunikationssteuerung (305) festgelegten Kanal, wobei die Kommunikationseinrichtung (1100) ausgelegt ist zum Überwachen des Inhalts, wobei das Überwachen des Inhalts das Ermitteln umfasst, ob der Inhalt erfolgreich empfangen wurde; und
Aktualisieren der Peer-Information, falls der Inhalt nicht erfolgreich empfangen wurde, wobei das Aktualisieren der Peer-Information umfasst:
Aktualisieren von Information bezüglich des Peers;
Senden der aktualisierten Information bezüglich des Peers zur Kommunikationssteuerung (305);
Auswählen eines Ersatz-Peers aus der Peer-Liste oder einer neuen Peer-Liste; und
Wiederholen des Sendens der Inhaltsanforderung und des Empfangens des Inhalts mit dem Ersatz-Peer.

## Revendications

1. Procédé pour des opérations de dispositif de communication, le procédé consistant :
à recevoir une liste d'homologues au niveau d'un dispositif de communication (315, 317, 319), dans lequel la liste d'homologues comprend une liste de dispositifs de communication atteignables et des informations de capacité de dispositif à dispositif (D2D) pour les dispositifs de communication atteignables ;
à sélectionner un homologue dans la liste d'homologues ;
à envoyer une demande de contenu comprenant une indication d'un contenu au contrôleur de communication (305) desservant le dispositif de communication (315, 317, 319) ;
à recevoir le contenu en provenance de l'homologue sur un canal établi par le contrôleur de communication (305),
à surveiller le contenu, dans lequel la surveillance du contenu consiste à déterminer si le contenu a été reçu avec succès ; et
à mettre à jour des informations d'homologue si le contenu n'a pas été reçu avec succès, dans lequel la mise à jour d'informations d'homologue consiste :
à mettre à jour des informations se rapportant à l'homologue ;
à envoyer les informations mises à jour se rapportant à l'homologue au contrôleur de communication (305) ;
à sélectionner un homologue de remplacement dans la liste d'homologues ou dans une nouvelle liste d'homologues ; et
à répéter l'envoi de la demande de contenu et la réception du contenu avec l'homologue de remplacement.

2. Procédé selon la revendication 1, dans lequel des informations de capacité D2D comportent des informations compatibles D2D, des informations non compatibles D2D, des informations atteignables D2D, des informations non atteignables D2D ou des combinaisons de ces dernières.

3. Procédé selon la revendication 1, consistant en outre à envoyer une demande de liste d'homologues à un dispositif de suivi ou au contrôleur de communication, la demande de liste d'homologues comprenant une indication du contenu.

4. Procédé selon la revendication 1, dans lequel la réception d'une liste d'homologues consiste à recevoir la liste d'homologues en provenance d'un dispositif de suivi et la liste d'homologues est renforcée avec les informations compatibles D2D des dispositifs de communication atteignables fournies par le contrôleur de communication.

5. Procédé selon la revendication 1, dans lequel la liste d'homologues comprend une première liste d'homologues et une seconde liste d'homologues, dans lequel la première liste d'homologues est reçue en provenance d'un dispositif de suivi et dans lequel la seconde liste d'homologues comprend les informations compatibles D2D des dispositifs de communication atteignables fournies par le contrôleur de communication.

6. Procédé selon la revendication 1, dans lequel la sélection d'un homologue consiste à sélectionner au moins un homologue dans la liste d'homologues en se basant sur des critères de sélection, dans lequel les critères de sélection comprennent une capacité d'atteindre D2D, un débit de données disponible, un nombre de connexions prises en charge, un nombre de connexions actuelles, une distance depuis le dispositif de communication, une latence de communication, des données de performances historiques ou des combinaisons de ces derniers.

7. Procédé selon la revendication 1, dans lequel la réception du contenu consiste à recevoir le contenu directement en provenance d'un dispositif de communication atteignable D2D lorsque le dispositif de communication atteignable D2D est sélectionné.

8. Procédé selon la revendication 1, dans lequel la détermination que le contenu n'a pas été reçu avec succès consiste à déterminer si le contenu était défectueux, si un premier temporisateur a expiré avant la réception d'un quelconque contenu, si un second temporisateur a expiré pendant la réception du contenu, si une perte d'un signal s'est produite pendant la réception du contenu, si une défaillance s'est produite pendant la réception du contenu ou des combinaisons de ces derniers.

9. Dispositif de communication (1100) comprenant :
un récepteur (1110) configuré pour recevoir une liste d'homologues comprenant une liste de dispositifs de communication atteignables et une capacité D2D des dispositifs de communication atteignables ;
une unité de sélection d'homologue (1124) couplée au récepteur, l'unité de sélection d'homologue étant configurée pour sélectionner un homologue dans la liste d'homologues ;
une unité de demande de contenu (1126) couplée à l'unité de sélection d'homologue et au récepteur, l'unité de demande de contenu étant configurée pour générer une demande de contenu comprenant une indication d'un contenu ; et
un émetteur (1105) couplé à l'unité de sélection d'homologue et à l'unité de demande de contenu, l'émetteur étant configuré pour envoyer la demande de contenu au contrôleur de communication (305) desservant le dispositif de communication (1100),
dans lequel le récepteur est en outre configuré pour recevoir le contenu en provenance de l'homologue sur un canal établi par le contrôleur de communication (305),
dans lequel le dispositif de communication (1100) est configuré :
pour surveiller le contenu, dans lequel la surveillance du contenu consiste à déterminer si le contenu a été reçu avec succès ; et
pour mettre à jour des informations d'homologue si le contenu n'a pas été reçu avec succès, dans lequel la mise à jour d'informations d'homologue consiste :
à mettre à jour des informations se rapportant à l'homologue ;
à envoyer les informations mises à jour se rapportant à l'homologue au contrôleur de communication (305) ;
à sélectionner un homologue de remplacement dans la liste d'homologues ou dans une nouvelle liste d'homologues ; et
à répéter l'envoi de la demande de contenu et la réception du contenu avec l'homologue de remplacement.
